(19)

Europäisches
Patentamt
European
Patent Office
Office européen
des brevets

(11) **EP 4 190 929 A1**

(12) **EUROPEAN PATENT APPLICATION**
published in accordance with Art. 153(4) EPC

(43) Date of publication:
**07.06.2023 Bulletin 2023/23**

(21) Application number: **21849661.0**

(22) Date of filing: **20.07.2021**

(51) International Patent Classification (IPC):
*C22C 9/06* (2006.01)    *C22F 1/00* (2006.01)
*C22F 1/08* (2006.01)

(52) Cooperative Patent Classification (CPC):
**C22C 9/06; C22F 1/08; H01B 1/02; H01B 5/02;**
C22F 1/00; Y02P 10/20

(86) International application number:
**PCT/JP2021/027236**

(87) International publication number:
**WO 2022/024891 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2020 JP 2020128573**

(71) Applicant: **Dowa Metaltech Co., Ltd
Tokyo 101-0021 (JP)**

(72) Inventors:
• **KASATANI Shuhei**
  **Tokyo 101-0021 (JP)**
• **SHUTOH Toshiya**
  **Tokyo 101-0021 (JP)**
• **HYODO Hiroshi**
  **Tokyo 101-0021 (JP)**
• **SUGAWARA Akira**
  **Tokyo 101-0021 (JP)**

(74) Representative: **Klang, Alexander H.
Wagner & Geyer Partnerschaft mbB
Patent- und Rechtsanwälte
Gewürzmühlstrasse 5
80538 München (DE)**

(54) **CU-NI-AL-BASED COPPER ALLOY PLATE MATERIAL, METHOD FOR MANUFACTURING SAME, AND ELECTROCONDUCTIVE SPRING MEMBER**

(57)    A copper alloy plate material, having a chemical composition comprising, in mass%, Ni: 10.0 to 30.0%, Al: 1.00 to 6.50%, Ag: 0 to 0.50%, B: 0 to 0.1%, Co: 0 to 2.0%, Cr: 0 to 0.5%, Fe: 0 to 2.0%, Ga: 0 to 0.5%, Ge: 0 to 0.5%, In: 0 to 0.5%, Mg: 0 to 2.0%, Mn: 0 to 2.0%, P: 0 to 0.2%, Si: 0 to 2.0%, Sn: 0 to 2.0%, Ti: 0 to 2.0%, Zn: 0 to 2.0%, and Zr: 0 to 0.3%, with the balance of Cu and unavoidable impurities, and satisfying Ni/Al $\leq$ 9.0, wherein a Cu concentration $X_{Cu}$ in a precipitate represented by $X_{Cu}$ (mass%) = [Cu / (Cu + Ni + Al)] $\times$ 100 is 15 to 50 mass%, and a Vickers hardness is 300 HV or more.

[Fig.1]

EP 4 190 929 A1

**Description**

Technical Field

The present invention relates to a Cu-Ni-Al-based copper alloy plate material having an excellent ability to suppress smut generation during etching processing and a method for manufacturing the same. Further, the present invention relates to an electroconductive spring member using the plate material.

Background Art

A Cu-Ni-Al-based copper alloy can achieve high strength by Ni-Al-based precipitates, and also has a metallic appearance with a lighter copper color among the copper alloys. The copper alloy of this component system is useful as an electroconductive spring member such as a lead frame or a connector, or a non-magnetic high-strength member.
With the miniaturization and densification of electronic devices, there is also an increasing need for miniaturization of an electroconductive spring member used therefor. In order to advance the miniaturization of the electroconductive spring member, the strength is required to be further increased. In a Cu-Ni-Al-based copper alloy, it is necessary to form a large amount of precipitates in order to increase the strength. On the other hand, a small electroconductive spring member that requires high dimensional accuracy is often manufactured through an etching process. When etching a copper alloy containing a large amount of precipitates, particles derived from the precipitates that are difficult to dissolve in the etching solution form smut (a residual substance attached to the surface of the material), which is a factor to deteriorate the etching property and cause stains on parts. In addition, in order to obtain a material for a thin-walled part, the number of passes or a rolling load tends to increase in the final cold rolling step, and thereby the risk of decreasing the productivity or decreasing the yield due to edge cut, rupture, or the like is also increasing.
Heretofore, various studies have been conducted to improve various other properties while utilizing the high strength property of a Cu-Ni-Al-based copper alloy.
For example, PTL 1 describes a technique for obtaining a material having high strength, excellent workability, and high electrical conductivity by precipitating a $\gamma'$ phase containing Si with an average particle diameter of 100 nm or less in a step of performing a solution treatment at 700 to 1020°C and an aging treatment at 400 to 650°C for a Cu-Ni-Al-based copper alloy containing a predetermined amount of Si. However, PTL 1 does not disclose a technique effective in suppressing smut generation.
PTL 2 discloses a technique for manufacturing a plate material having an excellent "strength-bending workability balance" and also having excellent discoloration resistance in a Cu-Ni-Al-based copper alloy. In a manufacturing process therefor, a method in which cold rolling strain is applied to a material having been subjected to a solution treatment as needed, and then, a first aging treatment in a higher temperature range and a second aging treatment in a conventional and common temperature range are successively performed is adopted. It is said that by this two-step aging treatment, grain boundary reaction type discontinuous precipitation is less likely to occur, and at the same time, intragranular precipitation of fine second-phase particles that contribute to the improvement of strength occurs sufficiently, so that an excellent strength-bending workability balance can be achieved. However, PTL 2 does not disclose a technique effective in suppressing smut generation.
PTL 3 discloses a technique for manufacturing a plate material having a high Young's modulus in a Cu-Ni-Al-based copper alloy. Specifically, it is said that cold rolling with intermediate annealing intervening therebetween is performed under specific conditions, a solution treatment is performed at a slow temperature rise rate, and finish cold rolling is performed under the condition that the rolling ratio is controlled to be low, and thereafter, an aging treatment is performed, whereby a specific crystal orientation is obtained, and a high Young's modulus can be achieved. However, PTL 3 does not disclose a technique effective in suppressing smut generation.
PTL 4 discloses a technique for manufacturing a plate material having an excellent etching property in a Cu-Ni-Al-based copper alloy. In the manufacturing process, a method in which rapid heating is performed during a solution treatment, cold rolling is performed after an aging treatment, and thereafter, a finish heat treatment is performed so that the temperature rise rate does not become excessive is adopted. It is said that according to this, a structure state with a large KAM value is brought about, and an etched surface with high smoothness can be obtained. In addition, it is taught that reduction of the formation of coarse precipitates is also effective in improving the etching property. However, also in PTL 4, there is no teaching regarding a technique effective in suppressing smut generation.

Citation List

Patent Literature

PTL 1: WO 2012/081573
PTL 2: JP-A-2020-50923
PTL 3: JP-A-2020-79436
PTL 4: JP-A-2019-2042

Summary of Invention

Technical Problem

A Cu-Ni-Al-based copper alloy is a useful alloy for an electroconductive spring member such as a connector, but no effective solution was found for a technique for suppressing smut generation during etching. An object of the present invention is to provide a Cu-Ni-Al-based copper alloy plate material having a high strength level and also having an ability to remarkably suppress smut generation during etching processing as compared to a conventional one. Further, a manufacturing process effective in reducing a load in the final cold rolling when manufacturing a high-strength thin plate material is disclosed.

Solution to Problem

An Ni-Al-based precipitate that contributes to an increase in the strength of a Cu-Ni-Al-based copper alloy is mainly composed of an intermetallic compound of Ni and Al, but Cu is also present in the precipitate particles. The inventors found that smut generation during etching can be remarkably suppressed by increasing the concentration of Cu in the Ni-Al-based precipitate, and completed the present invention.

Specifically, the object can be achieved by a copper alloy plate material having a chemical composition comprising, in mass%, Ni: 10.0 to 30.0%, Al: 1.00 to 6.50%, Ag: 0 to 0.50%, B: 0 to 0.10%, Co: 0 to 2.0%, Cr: 0 to 0.5%, Fe: 0 to 2.0%, Ga: 0 to 0.5%, Ge: 0 to 0.5%, In: 0 to 0.5%, Mg: 0 to 2.0%, Mn: 0 to 2.0%, P: 0 to 0.2%, Si: 0 to 2.0%, Sn: 0 to 2.0%, Ti: 0 to 2.0%, Zn: 0 to 2.0%, and Zr: 0 to 0.3%, with the balance of Cu and unavoidable impurities, and satisfying the following formula (1), wherein a Cu concentration $X_{Cu}$ in a precipitate determined by the following formula (2) based on an analysis of a residue electrolytically extracted in an aqueous phosphoric acid solution at a concentration of 7 mol/L is 15 to 50 mass%, and a Vickers hardness is 300 HV or more.

$$Ni/Al \leq 9.0 \qquad\qquad (1)$$

Here, in the place of an element symbol in the formula (1), the value of the content of the element expressed in mass% is substituted.

$$X_{Cu} \ (mass\%) = [Cu \ / \ (Cu + Ni + Al)] \times 100 \qquad\qquad (2)$$

Here, in the place of an element symbol in the formula (2), the value of the mass ratio of the element in the residue is substituted.

In the above-mentioned plate material, it is preferred that a number density of fine precipitate particles having a major axis of 5 to 50 nm in an observation plane parallel to a plate surface is $1.0 \times 10^7$ particles/mm$^2$ or more. It is preferred that a full width at half maximum of an X-ray diffraction peak on a {220} crystal plane on the plate surface is 0.5° or more. It is preferred that a number density of coarse precipitate particles having a major axis of 1.0 $\mu$m or more in an observation plane parallel to the plate surface is $3.0 \times 10^4$ particles/mm$^2$ or less.

As a method for manufacturing the above-mentioned plate material, a method for manufacturing a copper alloy plate material, with which a plate material having a Vickers hardness of 300 HV or more is obtained by a manufacturing process including the following steps in the following order:

a step of heating a cast slab having the above-mentioned chemical composition at 1000 to 1150°C (cast slab heating step);
a step of performing hot rolling under the condition that a rolling temperature in a final rolling pass is 800°C or higher (hot rolling step);
a step of performing cold rolling at a rolling ratio of 80% or more (cold rolling step);
a step of holding at 950 to 1100°C for 30 to 360 seconds, and then, cooling under the condition that an average cooling rate from 900°C to 700°C is 110 to 150°C/s (solution treatment step);
a step of holding at 400 to 650°C for 0.5 to 75 hours, and then, cooling under the condition that an average cooling rate from 400°C to 300°C is 40 to 80°C/h (aging treatment step);

a step of performing cold rolling at a rolling ratio of 300 or more (final cold rolling step); and

a step of holding at 400 to 700°C for 10 to 600 seconds, and then, cooling under the condition that an average cooling rate from 400°C to 300°C is 50 to 90°C/s (final heat treatment step) is provided. At that time, it is preferred that a plate material having a Vickers hardness H3 of 300 HV or more is obtained by a manufacturing process in which a value M in the following formula (4) representing a relationship of a Vickers hardness H1 (HV) after the aging treatment step, a Vickers hardness H2 (HV) after the final cold rolling step, and a Vickers hardness H3 (HV) after the final heat treatment step is -0.2 or more and 1.2 or less.

$$M = (H2 - H1) / (H3 - H2) \qquad (4)$$

Further, in the present invention, an electroconductive spring member using the above-mentioned copper alloy plate material as a material is provided.

In the present specification, the "plate surface" is a surface perpendicular to the plate thickness direction of the plate material. The "plate surface" is sometimes called "rolled surface". As the Vickers hardness, a Vickers hardness of the plate surface of the plate material measured in accordance with JIS Z 2244: 2009 can be adopted. The full width at half maximum of an X-ray diffraction peak on a {220} crystal plane on the plate surface is obtained by measuring an X-ray diffraction pattern on the plate surface using a Cu-K$\alpha$ ray under the conditions of a tube voltage of 30 kV and a tube current of 10 mA, removing a K$\alpha_2$ ray with an X-ray diffraction pattern analysis software, followed by calculation. The "major axis" of a particle is defined as the diameter (nm or $\mu$m) of the smallest circumscribed circle that surrounds the particle. The "number density of fine precipitate particles having a major axis of 5 to 50 nm" and the "number density of coarse precipitate particles having a major axis of 1.0 $\mu$m or more" can be determined as follows, respectively.

[How to Determine Number Density of Fine Precipitate Particles]

An observation plane obtained by electropolishing the plate surface under the following electropolishing conditions, and thereafter performing ultrasonic cleaning for 20 minutes in ethanol is observed with an FE-SEM (field emission scanning electron microscope) at a magnification of 100,000 times, and an observation field of view where a part or the whole of a particle having a major axis of 1.0 $\mu$m or more is not included in the field of view is randomly set. In the observation field of view, the number of precipitate particles having a major axis of 5 to 50 nm among the particles whose entire outline is visible is counted. This operation is performed for 10 or more observation fields of view with no overlapping regions, and a value obtained by dividing the total number of counts $N_{TOTAL}$ in all observed fields of view by the total area of the observation fields of view is converted into the number of precipitate particles per square millimeter, which is defined as the number density (particles/mm$^2$) of fine precipitate particles.

(Electropolishing Conditions).

- electrolytic solution: mixing distilled water, phosphoric acid, ethanol, and 2-propanol at a volume ratio of 10:5:5:1
- liquid temperature: 20°C
- voltage: 15 V
- electrolysis time: 20 seconds

[How to Determine Number Density of Coarse Precipitate Particles]

An observation plane obtained by electropolishing the plate surface under the following electropolishing conditions and dissolving only the Cu basis material to expose precipitate particles, and thereafter performing ultrasonic cleaning for 20 minutes in ethanol is observed with an FE-SEM (field emission scanning electron microscope), and a value obtained by dividing the total number of precipitate particles having a major axis of 1.0 $\mu$m or more observed on an FE-SEM image by the total observation area (mm$^2$) is defined as the number density (particles/mm$^2$) of coarse precipitate particles. The total observation area is set to 0.1 mm$^2$ or more in total with a plurality of randomly set non-overlapping observation fields of view. A precipitate particle partially protruding from the observation field of view is counted if the major axis of the part appearing in the observation field of view is 1.0 $\mu$m or more.

(Electropolishing Conditions).

- electrolytic solution: mixing distilled water, phosphoric acid, ethanol, and 2-propanol at a volume ratio of 10:5:5:1
- liquid temperature: 20°C
- voltage: 15 V
- electrolysis time: 20 seconds

The rolling ratio from a certain plate thickness $t_0$ (mm) to a certain plate thickness $t_1$ (mm) is determined by the following formula (3).

$$\text{Rolling ratio (\%)} = [(t_0 - t_1) / t_0] \times 100 \quad (3)$$

Advantageous Effects of Invention

According to the present invention, it has become possible to provide a plate material having an extremely high strength level and also having an ability to remarkably suppress smut generation during etching processing as compared to a conventional one in a Cu-Ni-Al-based copper alloy having a composition range exhibiting a white-toned metallic appearance. Further, in a final cold rolling step for obtaining such a high-strength thin plate material, a work softening phenomenon can be utilized, and it has become possible to reduce the rolling load.

Brief Description of Drawings

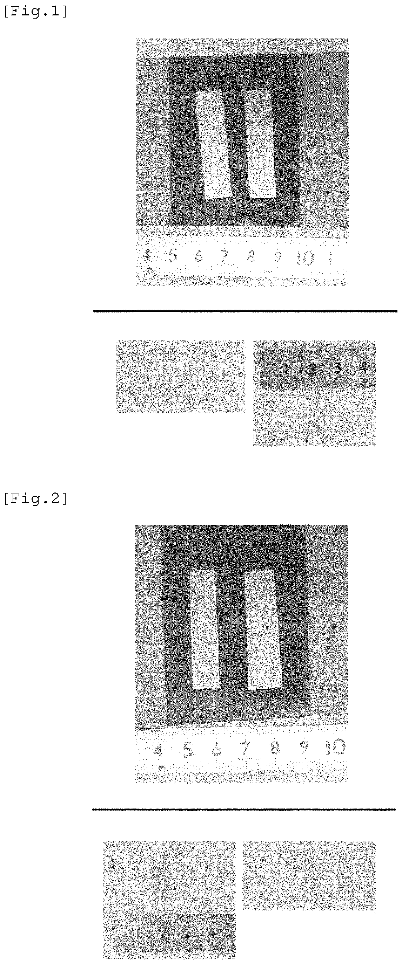

[Fig. 1] Fig. 1 is a view illustrating an appearance photograph (upper part) of a test piece after an etching test, and an appearance photograph (lower part) of a cellophane adhesive tape having been subjected to a peeling test on the surface thereof for a test material of Present Inventive Example No. 1.
[Fig. 2] Fig. 2 is a view illustrating an appearance photograph (upper part) of a test piece after an etching test, and an appearance photograph (lower part) of a cellophane adhesive tape having been subjected to a peeling test on the surface thereof for a test material of Present Inventive Example No. 7.

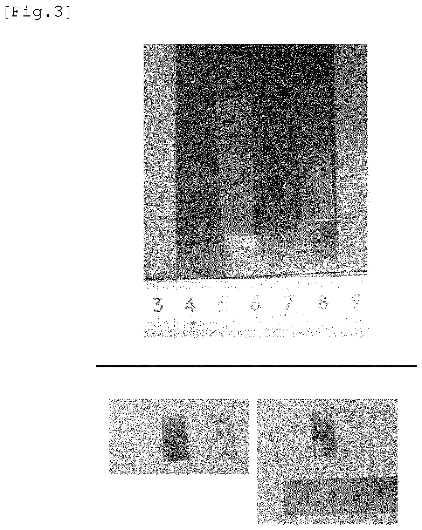

[Fig. 3] Fig. 3 is a view illustrating an appearance photograph (upper part) of a test piece after an etching test, and an appearance photograph (lower part) of a cellophane adhesive tape having been subjected to a peeling test on the surface thereof for a test material of Comparative Example No. 34.

Description of Embodiments

[Chemical Composition]

The present invention is directed to a Cu-Ni-Al-based copper alloy. Hereinafter, the symbol "%" regarding the alloy components means "mass%" unless otherwise specified.

Ni is a major element that constitutes a matrix (metal substrate) of a Cu-Ni-Al-based copper alloy together with Cu. Further, a part of Ni in the alloy combines with Al to form a Ni-Al-based precipitate, and the fine particles thereof contribute to the improvement of strength. In order to obtain sufficient strength, it is desirable to ensure a Ni content of 10% or more. Further, with the increase in the Ni content, a more white-toned metallic appearance is exhibited as compared to other general copper alloys. However, like other copper alloys, when it is exposed to a high humidity environment, a thin oxide film is formed on the metal surface, and the color may change to such an extent that it can be seen in the appearance. In that case, the beautiful white appearance is impaired. In particular, when discoloration resistance is emphasized, it is more preferred to increase the Ni content to 12.0% or more and also ensure the Al content as described later. It is more effective to set the Ni content to 15.0% or more. On the other hand, when the Ni content is high, the hot workability deteriorates. The Ni content is limited to 30.0% or less and may be limited to 25.0% or less. Further, the Ni content may be controlled to 18.0% or more and 22.0% or less.

Al is an element that forms a Ni-Al-based precipitate. If the Al content is too small, the improvement of strength will be insufficient. On the other hand, if the Al content becomes excessive, the hot workability deteriorates. Further, the discoloration resistance can be improved by also increasing the Al content with the increase in the Ni content. As a result of various studies, it is necessary to set the Al content within a range of 1.00 to 6.50% and set the Ni/Al ratio to a value that satisfies the following formula (1). It is more preferred to satisfy the following formula (1)'.

$$Ni/Al \leq 9.0 \qquad (1)$$

$$2.0 \leq Ni/Al \leq 8.0 \qquad (1)'$$

Here, in the place of an element symbol of the formulae (1) and (1)', the value of the content of the element expressed in mass% is substituted.

As other elements, Ag, B, Co, Cr, Fe, Ga, Ge, In, Mg, Mn, P, Si, Sn, Ti, Zn, Zr, or the like can be contained as needed. The ranges of contents of these elements are as follows: Ag: 0 to 0.50%, B: 0 to 0.10%, Co: 0 to 2.0%, Cr: 0 to 0.5%, Fe: 0 to 2.0%, Ga: 0 to 0.5%, Ge: 0 to 0.5%, In: 0 to 0.5%, Mg: 0 to 2.0%, Mn: 0 to 2.0%, P: 0 to 0.2%, Si: 0 to 2.0%, Sn: 0 to 2.0%, Ti: 0 to 2.0%, Zn: 0 to 2.0%, and Zr: 0 to 0.3%. Further, the total amount of these optional additive elements is desirably set to 2.0% or less, and may be set to 1.20 or less, or 0.50 or less.

[Cu Concentration $X_{Cu}$ in Precipitate]

It was found that by controlling the Cu concentration in the precipitate, smut generation during etching can be remarkably suppressed while maintaining high strength. Cu is also present in the Ni-Al-based precipitate together with Ni and Al, but the Cu concentration is set higher than usual. Specifically, the composition of the precipitate is controlled so that the Cu concentration $X_{Cu}$ in the precipitate determined by the following formula (2) based on an analysis of a residue electrolytically extracted in an aqueous phosphoric acid solution at a concentration of 7 mol/L is 15 to 50 mass%.

$$X_{Cu} \ (mass\%) = [Cu \ / \ (Cu + Ni + Al)] \times 100 \qquad (2)$$

Here, in the place of an element symbol in the formula (2), the value of the mass ratio of the element in the residue is substituted.

By setting the $X_{Cu}$ to 15 or more, the effect of suppressing smut generation is remarkably exhibited. The mechanism has not been elucidated at this time, but it is presumed that the increase in the amount of Cu solid-dissolved in the precipitate makes it easy to dissolve the precipitate in the etching solution (for example, an aqueous ferric chloride solution). The increase in $X_{Cu}$ to 15 or more can be achieved by following the manufacturing method described below. $X_{Cu}$ is more preferably 20 or more. If $X_{Cu}$ exceeds 50, high strength cannot be maintained, and therefore, $X_{Cu}$ may be adjusted within a range of 50 or less. It may be adjusted within a range of 45 or less, or 40 or less.

[Vickers Hardness]

In order to apply to a small electroconductive spring member, it is advantageous that the strength is increased to a high level. The Vickers hardness is preferably 300 HV or more, and more preferably 320 HV or more. Further, it is also possible to adjust the strength to 340 HV or more, or 380 HV or more, which is an extremely high strength level for a Cu-Ni-Al-based copper alloy. The upper limit of the hardness is not particularly specified, but may usually be adjusted within a range of 450 HV or less. The strength level can be adjusted by setting the chemical composition and the conditions in the manufacturing process described below.

[Number Density of Fine Precipitate Particles with Major Axis of 5 to 50 nm]

The fine precipitate particles having a major axis of 5 to 50 nm contribute to the improvement of strength by existing in a dispersed state in a matrix (metal substrate). The fine precipitate formed in the Cu-Ni-Al-based copper alloy, to which the present invention is directed, is a Ni-Al-based precipitate mainly composed of Ni and Al. From the viewpoint of improving the strength, the number density of fine precipitate particles having a major axis of 5 to 50 nm is preferably $1.0 \times 10^7$ particles/mm$^2$ or more, and more preferably $2.5 \times 10^7$ particles/mm$^2$ or more. Normally, it may be adjusted within a range of $5.0 \times 10^{10}$ particles/mm$^2$ or less. Although Cu is also contained in the particles of the Ni-Al-based precipitate, in the copper alloy plate material of the present invention, the effect of suppressing smut generation is obtained by controlling the Cu concentration to be high as described above.

[Number Density of Coarse Precipitate Particles with Major Axis of 1.0 um or more]

In order to form an etched surface with high smoothness by etching processing, it is advantageous that the abundance of coarse precipitates is as small as possible. Specifically, the existing density of coarse precipitate particles having a major axis of 1.0 $\mu$m or more is preferably $3.0 \times 10^4$ particles/mm$^2$ or less, and more preferably $1.0 \times 10^4$ particles/mm$^2$ or less.

[Full Width at Half Maximum of X-Ray Diffraction Peak on {220} Crystal Plane]

In the Cu-Ni-Al-based copper alloy plate material according to the present invention, the full width at half maximum of an X-ray diffraction peak on a {220} crystal plane on the plate surface is, for example, 0.5° or more. In such a copper alloy plate material, lattice strain has been sufficiently introduced, which makes it advantageous in obtaining an etched surface with high strength and high smoothness.

[Manufacturing Method]

The copper alloy plate material described above can be manufactured by, for example, the following manufacturing process.
Melting and casting -> cast slab heating -> hot rolling → cold rolling -> (intermediate annealing -> cold rolling) → solution treatment -> aging treatment -> final cold rolling -> final heat treatment
Although the description is omitted in the above-mentioned process, surface grinding is performed as needed after hot rolling, and after each heat treatment, pickling, polishing, or further degreasing is performed as needed. Hereinafter, the respective steps will be described.

[Melting and Casting]

A cast slab may be manufactured by continuous casting, semi-continuous casting, or the like. From the viewpoint of preventing the oxidation of Al, it is preferred to perform melting in an inert gas atmosphere or under vacuum in a chamber.

[Cast Slab Heating]

The cast slab is heated and held at 1000 to 1150°C. This heating can be carried out by utilizing the cast slab heating step at the time of hot rolling. Conventionally, cast slab heating of a Cu-Ni-Al-based copper alloy was often performed at a temperature of 950°C or lower. In the present invention, it is necessary to control the Cu concentration in the precipitate in the later step. To do this, it is effective to solid-dissolve the coarse second phase present in the cast structure as much as possible beforehand by heating the cast slab to the above-mentioned high temperature. However, if the temperature exceeds 1150°C, the portion having a low melting point in the cast structure becomes fragile, and there is a risk of occurrence of a crack in hot rolling. It is more effective to set the heating holding time to 1.5 hours or more in the above temperature range, and it is further more effective to set the heating holding time to 2 hours or more. In consideration of economic efficiency, it is desirable to set the cast slab heating time within a range of 5 hours or less in the above temperature range.

[Hot Rolling]

In the hot rolling, the rolling temperature in the final pass is set to 800°C or higher. The temperature in each rolling pass can be represented by the surface temperature of the material immediately after coming out of the work roll in the rolling pass. By heating the cast slab in the above-mentioned high temperature range and hot rolling at 800°C or higher, the abundance of the coarse second phase is sufficiently reduced. This makes it possible to control the Cu concentration in the precipitate within an appropriate range in the later step. In the plate material after hot rolling (hot-rolled plate), it is desirable to suppress the number density of coarse second-phase particles having a major axis of 5 um or more on the observation plane parallel to the plate surface to, for example, 10 particles/mm$^2$ or less. From the viewpoint of stably achieving a final pass rolling temperature of 800°C or higher in the operation at a mass manufacturing site, the plate thickness after hot rolling (finished plate thickness) is preferably set within a range of, for example, 5 to 20 mm, and more preferably within a range of 7 to 20 mm.

[Cold Rolling]

Before the solution treatment, the plate thickness can be adjusted by performing cold rolling. If necessary, a step of "intermediate annealing → cold rolling" may be added once or multiple times. The rolling ratio in cold rolling performed before the solution treatment (in the case of performing intermediate annealing, the rolling ratio in cold rolling after final intermediate annealing) can be set to, for example, 80% or more. The upper limit of the rolling ratio may be set within a range of, for example, 99.5% or less according to the capacity of a mill.

[Solution Treatment]

In the solution treatment in the present invention, heating is performed at a temperature higher than the solution treatment temperature (about 800 to 900°C) of a general Cu-Ni-Al-based copper alloy. Specifically, the time for holding the material in a temperature range of 950 to 1100°C is set to 30 to 360 seconds. When heating is performed in such a high temperature range, the second phase can be sufficiently solid-dissolved even if the holding time is short as described above. In the present invention, in addition to the above-mentioned heating temperature and holding time, it is important to control the cooling rate after the solution treatment within a narrow range. Specifically, the average cooling rate from 900°C to 700°C is set within a range of 110 to 150°C/s. If the cooling rate in this temperature range is slow, the effect of suppressing smut generation cannot be sufficiently obtained. On the other hand, it was found that if the cooling rate is too fast, it becomes difficult to stably obtain a structure in which a sufficient amount of fine precipitates are dispersed in the later step, which is disadvantageous in achieving a very high strength level. It is speculated that when the cooling rate in the above temperature range after the solution treatment is controlled within a narrow range of 110 to 150°C/s, a large number of nuclei for fine precipitation are formed in the crystal grains in the course of cooling, and also the growth thereof to precipitate particles moderately progresses so that "a precursor structure state" suitable for dispersing a large number of fine precipitates having a high Cu concentration is obtained in a series of subsequent steps. In the actual operation, it is efficient to continue forced cooling until a temperature range of 10°C or higher and 100°C or lower is reached under the cooling condition that the average cooling rate from 900°C to 700°C is within a range of 110 to 150°C/s, and it is more preferred to continue forced cooling until a temperature range of 20°C or higher and 50°C or lower is reached.

[Aging Treatment]

Subsequently, the aging treatment is performed. After the solution treatment, the aging treatment can be directly performed in a structure state as it is after completion of the solution treatment step without introducing processing strain in cold rolling or the like. The aging treatment is performed under the condition that the average cooling rate from at least 400°C to 300°C is 40 to 80°C/h after holding at 400 to 650°C for 0.5 to 75 hours. After that, it is preferred to continuously continue cooling in a furnace until a temperature range of 10°C or higher and 200°C or lower is reached, and it is more preferred to continue cooling in a furnace until a temperature range of 20°C or higher and 100°C or lower is reached. It is extremely effective to strictly control the cooling condition as described above in adjusting the Cu concentration in the precipitate within the predetermined range. If the cooling rate is too fast, it becomes difficult to ensure a sufficient amount of fine precipitates after the below-mentioned final heat treatment, which is disadvantageous in obtaining high strength. If the cooling rate is too slow, the concentration of Cu that is solid-dissolved in the precipitated phase decreases, and thus, it becomes difficult to obtain a plate material having a high Cu concentration in the precipitate after the below-mentioned final heat treatment, and also a work softening action is not sufficiently exhibited in the final cold rolling in the subsequent step.

[Final Cold Rolling]

After the aging treatment, cold rolling is performed to the final target plate thickness. This cold rolling is referred to as "final cold rolling" in the present specification. The final cold rolling aims at not only adjusting to a target plate thickness, but also applying rolling strain so that a sufficient hardening phenomenon is exhibited in the final heat treatment in the subsequent step. From the viewpoint of applying rolling strain, it is necessary to set the rolling ratio in the final cold rolling to 300 or more. It is more effective to set the rolling ratio to 500 or more. The upper limit of the rolling ratio depends on the capacity of a mill, but may usually be set within a range of 99% or less. The final plate thickness can be adjusted within a range of, for example, 0.01 to 0.50 mm.

In general, the higher the cold rolling ratio is, the greater the deformation resistance becomes due to work hardening. For example, when finishing a thin plate material having a plate thickness of 0.1 mm or less, the increase in the number of passes or edge cut in the material is likely to be a problem. However, when cold rolling is performed for the aging-treated material according to the above-mentioned manufacturing conditions, work hardening is remarkably suppressed, and the above-mentioned problem is greatly improved. Although the cause thereof has not been elucidated yet, a precipitate having a high Cu concentration is formed at the time of completion of the above-mentioned aging treatment, and it is speculated that Cu is solid-dissolved in the precipitate and the composition of the precipitate approaches to that of the parent phase, so that the precipitate particles are solid-dissolved easily in a pseudo manner during plastic deformation due to rolling (that is, when rolling strain is applied), and as a result, a phenomenon in which an increase in hardness is very small or rather the hardness decreases even in cold working occurs. Such a phenomenon is referred to as "work softening" in the present specification.

[Final Heat Treatment]

The plate material after completion of the final cold rolling is subjected to a final heat treatment to increase the strength while controlling the Cu concentration in the precipitate. The final heat treatment is performed under the condition that the average cooling rate from 400°C to 300°C is 50 to 90°C/s after holding at 400 to 700°C, more preferably at 420 to 700°C for 10 to 600 seconds. In this heat treatment, it is speculated that the solute atoms solid-dissolved in a pseudo manner in the final cold rolling are finely precipitated, and thereby a structure state where dislocations do not move easily is obtained. If the cooling rate is slow, the Cu concentration in the precipitate decreases, and it becomes difficult to stably obtain a plate material having a high effect of suppressing smut generation. If the cooling rate is too fast, precipitation from the pseudo-solid solution state cannot proceed sufficiently, and as a result, a high strength level cannot be obtained. In the actual operation, it is efficient to continue forced cooling until a temperature range of 10°C or higher and 100°C or lower is reached under the cooling condition that the average cooling rate from 400°C to 300°C is within a range of 50 to 90°C/s, and it is more preferred to continue forced cooling until a temperature range of 20°C or higher and 50°C or lower is reached.

An electroconductive spring member with high dimensional accuracy can be obtained by performing processing including etching using the plate material according to the present invention obtained as described above as a material.

Examples

Each of copper alloys having a chemical composition shown in Table 1 was melted and cast using a vertical semi-continuous casting machine. Each of the obtained cast slabs was heated and held at a temperature for a period of time shown in Table 2 or 3, then extracted, hot-rolled, and water-cooled. The total hot rolling ratio is 85 to 95%. A rolling temperature in the final pass and a finished plate thickness after hot rolling are shown in Tables 2 and 3. In some examples (Nos. 35, 37, and 39) in which a crack occurred in hot rolling, manufacturing was discontinued at that point. After hot rolling, the oxidized layer of the surface layer was removed by mechanical polishing (surface grinding), and cold rolling was performed at a rolling ratio shown in Table 2 or 3.

Each of the obtained cold-rolled materials was subjected to a solution treatment under the conditions shown in Table 2 or 3 using a continuous annealing furnace equipped with a heating zone and a forced cooling zone. After heating to hold at a predetermined temperature for a predetermined time in the heating zone, forced cooling was performed by a method of blowing nitrogen gas forcedly convected with a fan in the forced cooling zone onto the surface of the plate material while passing the plate therethrough. The cooling rate can be controlled by adjusting the convection strength. While passing the plate therethrough, the plate surface temperature $T_0$ (°C) immediately before the start of forced cooling and the plate surface temperature $T_1$ (°C) immediately after completion of the forced cooling were measured. It was confirmed that $T_0$ was 900°C or higher and $T_1$ was 700°C or lower in each example. Therefore, the average cooling rate from 900°C to 700°C was obtained based on a cooling curve determined from the above $T_0$, $T_1$, and the plate passing speed.

After the solution treatment, the aging treatment was performed directly without applying cold rolling strain. The aging treatment was performed using a batch-type annealing furnace at a temperature shown in Table 2 or 3 under the conditions of holding for a period of time shown in the same table. As the atmosphere, a nitrogen atmosphere was used. After heating and holding, cooling was performed at a substantially constant cooling rate until the temperature became lower than 300°C in the furnace. Then, the final cold rolling was performed at a rolling rate shown in Table 2 or 3. Thereafter, a final heat treatment was performed under the conditions shown in Table 2 or 3 using a continuous annealing furnace equipped with a heating zone and a forced cooling zone. After heating to hold at a predetermined temperature for a predetermined time in the heating zone, forced cooling was performed by a method of blowing nitrogen gas forcedly convected with a fan in the forced cooling zone onto the surface of the plate material while passing the plate therethrough. The cooling rate can be controlled by adjusting the convection strength. While passing the plate therethrough, the plate surface temperature $T_0$ (°C) immediately before the start of forced cooling and the plate surface temperature $T_1$ (°C) immediately after completion of the forced cooling were measured. It was confirmed that $T_0$ was 400°C or higher and $T_1$ was 300°C or lower in each example. Therefore, the average cooling rate from 400°C to 300°C was obtained based on a cooling curve determined from the above $T_0$, $T_1$, and the plate passing speed.

In this manner, plate material products (test materials) having a final plate thickness shown in Table 2 or 3 were obtained. The following studies were performed for each test material. The "hardness" was measured not only for the test material after the final heat treatment, but also for the material after the aging treatment and the material after the final cold rolling.

(Cu concentration $X_{Cu}$ in Precipitate)

A sample was collected from the test material, the oxidized layer on the surface was removed by dry polishing using emery polishing paper with a grit size of 1000 (grain size P1000 specified in JIS R 6010: 2000), and then, a matrix (metal substrate) was dissolved by applying a voltage of about 2.0 V for 15 minutes in an aqueous phosphoric acid solution at a concentration of 7 mol/L at 25°C. The residue (precipitate) extracted in the solution was recovered by suction filtration using a filter having a pore size of 50 nm. At that time, the residue and the filter were washed with pure water until the pH of the sucked liquid became 6.2. With respect to the recovered residue, Cu, Ni, and Al were analyzed by ICP atomic emission spectroscopy, and based on the analysis, the Cu concentration $X_{Cu}$ in the precipitate determined by the following formula (2) was obtained. In the dissolution of the residue, a mixed acid obtained by mixing the same volume of nitric acid and hydrochloric acid was used.

$$X_{Cu}\ (mass\%)\ =\ [Cu\ /\ (Cu\ +\ Ni\ +\ Al)]\ \times\ 100 \qquad (2)$$

Here, in the place of an element symbol in the formula (2), the value of the mass ratio of the element in the residue is substituted.

(Full Width at Half Maximum of X-Ray Diffraction Peak on {220} Crystal Plane)

By using an X-ray diffractometer (manufactured by Bruker AXS GmbH; D2 Phaser), an X-ray diffraction pattern was measured on the plate surface using a Cu-K$\alpha$ ray under the conditions of a tube voltage of 30 kV and a tube current of 10 mA, and a K$\alpha_2$ ray was removed using a K$\alpha_2$ ray removal function of an X-ray diffraction pattern analysis software (manufactured by Bruker AXS GmbH; DIFFRAC. EVA) under the conditions of "maximum: 1, intensity ratio: 0.5, minimum: 0", and a full width at half maximum of an X-ray diffraction peak on a {220} crystal plane was calculated.

(Number Density of Fine Precipitate Particles)

According to the above "How to Determine Number Density of Fine Precipitate Particles", an observation plane prepared by electropolishing and ultrasonic cleaning was observed with an FE-SEM (manufactured by JEOL Ltd.; JSM-7200F), and the number density (particles/mm$^2$) of fine second-phase particles having a major axis of 5 to 50 nm was obtained. The electropolishing was performed using an electropolishing device manufactured by BUEHLER GmbH (ELECTROPOLISHER POWER SUPPLUY, ELECTROPOLISHER CELL MODULE). The ultrasonic cleaning was performed for 20 minutes in ethanol using an ultrasonic cleaner "BRANSONIC M2800-J".

(Hardness)

The Vickers hardness of the plate surface was measured by a method in accordance with JIS Z 2244: 2009. The measurement was performed at 7 points with a test force F (N) at which an average value d (mm) of the diagonal lengths $d_1$ and $d_2$ of a formed dent (indentation) is 2/3 or less of the sample plate thickness, and an average value of 5 points excluding the maximum and minimum values was adopted as the hardness of the test material.
In each example, a hardness H1 (HV) after the aging treatment, a hardness H2 (HV) after the final cold rolling, and a hardness H3 (HV) of the test material after the final heat treatment were measured, and a manufacturability index M represented by the following formula (4) was obtained.

$$M\ =\ (H2\ -\ H1)\ /\ (H3\ -\ H2) \qquad (4)$$

The manufacturability index M represents the ratio of "the increase in hardness in the final cold rolling" to "the increase in hardness after the final heat treatment", and the smaller this value is, the better the "strengthening of the material" that suppresses the work hardening in the final cold rolling in a favorable manner can be achieved. That is, the smaller the manufacturability index M is, the smaller the load in the final cold rolling is in the strengthening process combining the aging treatment, the final cold rolling, and the final heat treatment, and the manufacturability is evaluated to be good. As a result of various studies, if the manufacturability index M is 1.2 or less in this alloy system, it is determined that a high-strength plate material can be manufactured efficiently with a high yield by utilizing the above-mentioned strengthening process. Note that when the hardness is decreased by the final cold rolling, the manufacturability index M becomes a negative value, and it can be evaluated that the load in the rolling is particularly reduced. However, if the decrease in hardness in the final cold rolling is too large, in order to ensure sufficient strength, it is necessary to make the increase in hardness in the final heat treatment considerably large, and the final heat treatment conditions become more restrictive. Further, when the material is greatly work-hardened by the final cold rolling and then softened by the final heat treatment, the manufacturability index M may be a large negative value, which is not preferred from the viewpoint of load reduction in the final cold rolling. In consideration of the load balance in each step and the load reduction in the final cold rolling, the value M represented by the above formula (4) is preferably in the range of -0.2 or more and 1.2 or less.

(Amount of Smut Generated)

A test piece with a width of about 10 mm and a length of about 40 to 60 mm was cut out of the sample material, and the surface thereof was subjected to an etching test with a spray-type etching apparatus. An etching solution is an aqueous ferric chloride solution having a Baume degree of 42 Bh. The liquid temperature was set to 50°C, the spray pressure was set to 0.15 MPa, and the spray time was set to 120 seconds. The sample after the etching test was washed with water, and then dried, and a "peeling test" was performed by a method in which a cellophane adhesive tape according to JIS Z 1522: 2009 was attached to the surface of the sample and then peeled off. The smut generated by etching adheres to the surface of the sample after washing with water and drying. The ability to suppress smut generation can be evaluated based on the amount of smut transferred to the surface of the cellophane adhesive tape peeled off in the peeling test (the degree of black stain on the tape).

In each of Figs. 1 to 3, an appearance photograph (upper part) of the test piece after the etching test, and an appearance photograph (lower part) of the cellophane adhesive tape having been subjected to the peeling test on the surface thereof are illustrated. Fig. 1 shows Present Inventive Example No. 1, Fig. 2 shows Present Invention Example No. 7, and Fig. 3 shows Comparative Example No. 34. Each shows the results for two test pieces. It can be seen that smut generation is remarkably suppressed in those of Present Inventive Examples (Figs. 1 and 2) as compared to that of Comparative Example (Fig. 3). Here, the appearance of the test piece after the etching test and the degree of black stain on the cellophane adhesive tape peeled off in the peeling test were visually observed, and in comparison with Comparative Example No. 34 (Fig. 3), one in which an effect of suppressing smut generation was clearly observed was evaluated as "B" (ability to suppress smut generation: good), one in which a particularly remarkable effect of suppressing smut generation was observed was evaluated as "A" (ability to suppress smut generation: excellent), and all the other ones were evaluated as "C" (ability to suppress smut generation: insufficient improvement).

The results of these studies are shown in Tables 4 and 5 .

[Table 1]

Table 1

| Category | No. | Component composition (mass%) | | | | Ni/Al |
|---|---|---|---|---|---|---|
| | | Cu | Ni | Al | Others | |
| Present Inventive Example | 1 | balance | 20.1 | 2.98 | - | 6.74 |
| | 2 | balance | 19.2 | 2.80 | Co:1.1 | 6.86 |
| | 3 | balance | 28.5 | 6.24 | Mn:1.0 | 4.57 |
| | 4 | balance | 11.3 | 3.90 | B:0.04, Fe:1.0 | 2.90 |
| | 5 | balance | 27.5 | 4.27 | Co:0.16, P:0.1 | 6.44 |
| | 6 | balance | 18.6 | 3.00 | Zn:0.9, Zr:0.2 | 6.20 |
| | 7 | balance | 12.0 | 2.00 | Ti:0.9, Zr:0.1 | 6.00 |
| | 8 | balance | 21.1 | 5.00 | Mn:0.14, Cr:0.3 | 4.22 |
| | 9 | balance | 15.2 | 1.95 | Si:1.0, Ag:0.3 | 7.79 |
| | 10 | balance | 29.0 | 6.07 | Zn:0.1, Sn:0.1 | 4.78 |
| | 11 | balance | 20.1 | 2.77 | Sn:0.9 | 7.26 |
| | 12 | balance | 20.5 | 3.05 | Mg:0.9 | 6.72 |
| | 13 | balance | 10.4 | 1.20 | Si:1.0 | 8.67 |
| | 14 | balance | 18.2 | 2.80 | Zn:0.3, In:0.2 | 6.50 |
| | 15 | balance | 17.1 | 2.40 | Sn:0.3, Ga:0.2 | 7.13 |
| | 16 | balance | 21.0 | 3.10 | Si:0.2, Ge:0.2 | 6.77 |
| Comparative Example | 31 | balance | 20.0 | 3.01 | - | 6.64 |
| | 32 | balance | 18.6 | 3.06 | - | 6.08 |
| | 33 | balance | 16.5 | 4.32 | - | 3.82 |
| | 34 | balance | 12.0 | 2.00 | Zn:0.1, Sn:0.1 | 6.00 |
| | 35 | balance | <u>31.5</u> | 4.20 | - | 7.50 |
| | 36 | balance | <u>8.7</u> | 1.82 | - | 4.78 |
| | 37 | balance | 23.0 | <u>6.75</u> | - | 3.41 |
| | 38 | balance | 10.1 | <u>0.80</u> | - | <u>12.63</u> |
| | 39 | balance | 18.6 | 3.05 | Sn:0.9 | 6.10 |
| | 40 | balance | 18.6 | 3.18 | Co:1.1 | 5.85 |
| | 41 | balance | 15.0 | 2.20 | - | 6.82 |
| | 42 | balance | 10.5 | 1.86 | - | 5.65 |
| | 43 | balance | 11.3 | 2.02 | - | 5.59 |
| | 44 | balance | 11.0 | 1.94 | - | 5.67 |
| Underline: outside the range specified in the present invention | | | | | | |

[Table 2]

Table 2

| Category | No. | Cast slab heating | | Hot rolling | | Cold rolling | Solution treatment | | | Aging treatment | | | Final cold rolling | Final heat treatment | | | Final plate thickness (mm) |
|---|---|---|---|---|---|---|---|---|---|---|---|---|---|---|---|---|---|
| | | Temperature (°C) | Time (h) | Final pass rolling temperature (°C) | Finished plate thickness (mm) | Rolling ratio (%) | Temperature (°C) | Time (s) | Cooling rate (note 1) (°C/s) | Temperature (°C) | Time (h) | Cooling rate (note 2) (°C/h) | Rolling ratio (%) | Temperature (°C) | Time (s) | Cooling rate (note 2) (°C/s) | |
| Present Inventive Example | 1 | 1100 | 3 | 850 | 11.5 | 97.0 | 1000 | 60 | 120 | 500 | 10 | 50 | 90.0 | 550 | 60 | 80 | 0.03 |
| | 2 | 1050 | 3 | 845 | 7.1 | 93.0 | 960 | 300 | 115 | 630 | 5 | 50 | 70.0 | 550 | 60 | 80 | 0.15 |
| | 3 | 1050 | 3 | 902 | 11.5 | 97.0 | 1075 | 60 | 130 | 500 | 3 | 50 | 90.0 | 550 | 60 | 80 | 0.03 |
| | 4 | 1125 | 3 | 895 | 18.7 | 98.5 | 1000 | 60 | 135 | 420 | 5 | 55 | 90.0 | 500 | 60 | 85 | 0.03 |
| | 5 | 1100 | 3 | 841 | 11.5 | 97.0 | 1050 | 40 | 140 | 450 | 10 | 45 | 90.0 | 450 | 60 | 75 | 0.03 |
| | 6 | 1025 | 3 | 830 | 11.5 | 96.5 | 1000 | 60 | 125 | 500 | 10 | 50 | 50.0 | 550 | 60 | 80 | 0.20 |
| | 7 | 1050 | 3 | 825 | 11.5 | 97.0 | 1000 | 60 | 130 | 500 | 20 | 50 | 90.0 | 600 | 60 | 85 | 0.03 |
| | 8 | 1050 | 3 | 853 | 11.5 | 96.0 | 1000 | 60 | 125 | 500 | 10 | 50 | 95.0 | 550 | 60 | 80 | 0.02 |
| | 9 | 1050 | 3 | 846 | 11.5 | 96.0 | 975 | 60 | 135 | 410 | 60 | 45 | 90.0 | 550 | 60 | 80 | 0.05 |
| | 10 | 1050 | 3 | 904 | 11.5 | 97.4 | 1000 | 60 | 130 | 500 | 3 | 50 | 90.0 | 550 | 60 | 80 | 0.03 |
| | 11 | 1050 | 3 | 859 | 11.5 | 97.0 | 1000 | 60 | 130 | 500 | 10 | 50 | 40.0 | 550 | 60 | 80 | 0.21 |
| | 12 | 1050 | 3 | 892 | 7.4 | 94.5 | 1000 | 60 | 120 | 580 | 1 | 55 | 70.0 | 500 | 60 | 80 | 0.12 |
| | 13 | 1050 | 3 | 896 | 11.5 | 97.0 | 1000 | 60 | 120 | 500 | 10 | 50 | 90.0 | 500 | 60 | 80 | 0.03 |
| | 14 | 1100 | 3 | 897 | 11.5 | 97.0 | 1000 | 60 | 125 | 450 | 10 | 50 | 85.0 | 500 | 60 | 85 | 0.05 |
| | 15 | 1050 | 3 | 882 | 11.5 | 97.0 | 1000 | 60 | 125 | 500 | 10 | 50 | 90.0 | 500 | 60 | 80 | 0.03 |
| | 16 | 1050 | 3 | 861 | 11.5 | 97.0 | 1000 | 60 | 120 | 520 | 10 | 50 | 90.0 | 500 | 60 | 80 | 0.03 |

Note 1: average cooling rate from 900 to 700°C / Note 2: average cooling rate from 400 to 300°C

13

[Table 3]

[Table 3]

Table 3

| Category | No. | Cast slab heating | | Hot rolling | | Cold rolling | Solution treatment | | | Aging treatment | | | Final cold rolling | Final heat treatment | | | Final plate thickness (mm) |
|---|---|---|---|---|---|---|---|---|---|---|---|---|---|---|---|---|---|
| | | Temperature (°C) | Time (h) | Final pass rolling temperature (°C) | Finished plate thickness (mm) | Rolling ratio (%) | Temperature (°C) | Time (s) | Cooling rate (note 1) (°C/s) | Temperature (°C) | Time (h) | Cooling rate (note 2) (°C/h) | Rolling ratio (%) | Temperature (°C) | Time (s) | Cooling rate (note 2) (°C/s) | |
| Comparative Example | 31 | <u>950</u> | 3 | <u>752</u> | 11.5 | 97.0 | 1000 | 60 | 130 | 500 | 10 | 50 | 70.0 | 550 | 60 | 80 | 0.10 |
| | 32 | 1050 | 1 | 846 | 11.5 | 97.0 | <u>925</u> | 60 | 130 | 500 | 10 | 50 | 90.0 | 600 | 60 | 85 | 0.03 |
| | 33 | 1050 | 3 | 848 | 11.5 | 97.0 | 1000 | 100 | <u>90</u> | 500 | 10 | 50 | 90.0 | 550 | 60 | 80 | 0.03 |
| | 34 | 1050 | 3 | 847 | 11.5 | 97.0 | 1000 | 60 | 120 | 600 | 70 | <u>30</u> | 70.0 | 550 | 60 | 80 | 0.10 |
| | 35 | 1050 | 3 | (a crack occurred in hot rolling, and therefore, manufacturing was discontinued) | | | | | | | | | | | | | |
| | 36 | 1100 | 3 | 847 | 11.5 | 97.0 | 1000 | 60 | 130 | 500 | 10 | 50 | 90.0 | 550 | 60 | 80 | 0.03 |
| | 37 | 1050 | 3 | (a crack occurred in hot rolling, and therefore, manufacturing was discontinued) | | | | | | | | | | | | | |
| | 38 | 1050 | 3 | 855 | 11.5 | 97.0 | 1000 | 60 | 130 | 500 | 10 | 50 | 90.0 | 550 | 60 | 80 | 0.03 |
| | 39 | <u>1175</u> | 2 | (a crack occurred in hot rolling, and therefore, manufacturing was discontinued) | | | | | | | | | | | | | |
| | 40 | 1050 | 3 | <u>770</u> | 11.5 | 97.0 | 1000 | 20 | 135 | 500 | 10 | 50 | 90.0 | 550 | 60 | 80 | 0.03 |
| | 41 | 1050 | 3 | 803 | 11.5 | 97.0 | 1000 | 60 | 130 | 600 | 10 | 50 | 50.0 | 600 | 300 | <u>40</u> | 0.17 |
| | 42 | 1050 | 3 | 882 | 11.5 | 97.0 | 1050 | 60 | <u>200</u> | 410 | 10 | 55 | 80.0 | 450 | 60 | 85 | 0.07 |
| | 43 | 1050 | 3 | 864 | 11.5 | 97.0 | 1050 | 60 | 140 | 450 | 2 | <u>100</u> | 80.0 | 450 | 60 | 85 | 0.07 |
| | 44 | 1050 | 3 | 853 | 11.5 | 97.0 | 1000 | 60 | 140 | 450 | 5 | 55 | 80.0 | 500 | 20 | <u>110</u> | 0.07 |
| Note 1: average cooling rate from 900 to 700°C / Note 2: average cooling rate from 400 to 300°C / Underline: outside the range specified in the present invention | | | | | | | | | | | | | | | | | |

EP 4 190 929 A1

[Table 4]

Table 4

| Category | No. | After aging treatment | After final cold rolling | After final heat treatment (test material) | | | | Manufacturability index M (note 1) | Evaluation of ability to suppress smut generation |
|---|---|---|---|---|---|---|---|---|---|
| | | Hardness H1 (HV) | Hardness H2 (HV) | Hardness H3 (HV) | Cu concentration in precipitate $X_{Cu}$ (mass%) | {220} full width at half maximum (degree) | Number density of fine precipitates ($\times 10^7$ particles/mm$^2$) | | |
| Present Inventive Example | 1 | 310 | 322 | 401 | 29 | 0.74 | 9.8 | 0.15 | A |
| | 2 | 296 | 340 | 382 | 17 | 0.67 | 7.7 | 1.05 | B |
| | 3 | 325 | 352 | 416 | 24 | 0.75 | 10.8 | 0.42 | A |
| | 4 | 254 | 246 | 325 | 40 | 0.78 | 6.2 | -0.10 | A |
| | 5 | 321 | 320 | 404 | 32 | 0.75 | 10.1 | -0.01 | A |
| | 6 | 296 | 307 | 340 | 26 | 0.60 | 2.9 | 0.33 | A |
| | 7 | 246 | 244 | 322 | 33 | 0.77 | 1.7 | -0.03 | A |
| | 8 | 314 | 318 | 384 | 30 | 0.84 | 8.1 | 0.06 | A |
| | 9 | 276 | 272 | 338 | 35 | 0.75 | 2.7 | -0.06 | A |
| | 10 | 335 | 353 | 421 | 26 | 0.79 | 13.4 | 0.26 | A |
| | 11 | 296 | 304 | 342 | 27 | 0.55 | 3.4 | 0.21 | A |
| | 12 | 298 | 323 | 362 | 21 | 0.60 | 5.2 | 0.64 | A |
| | 13 | 242 | 241 | 322 | 32 | 0.73 | 1.8 | -0.01 | A |
| | 14 | 284 | 282 | 356 | 33 | 0.70 | 6.3 | -0.03 | A |
| | 15 | 276 | 284 | 342 | 29 | 0.74 | 5.1 | 0.14 | A |
| | 16 | 302 | 331 | 410 | 25 | 0.73 | 7.6 | 0.37 | A |

Note 1: (H2 - H1) / (H3 - H2)

[Table 5]

[Table 5]

Table 5

| Category | No. | After aging treatment | After final cold rolling | After final heat treatment (test material) | | | | Manufacturability index M (note 1) | Evaluation of ability to suppress smut generation |
| | | Hardness H1 (HV) | Hardness H2 (HV) | Hardness H3 (HV) | Cu concentration in precipitate $X_{Cu}$ (mass%) | {220} full width at half maximum (degree) | Number density of fine precipitates ($\times 10^7$ particles/mm$^2$) | | |
| Comparative Example | 31 | 301 | 335 | 362 | <u>12</u> | 0.60 | 6.1 | 1.26 | C |
| | 32 | 292 | 322 | 345 | <u>12</u> | 0.75 | 4.8 | 1.30 | C |
| | 33 | 291 | 328 | 354 | <u>11</u> | 0.75 | 5.4 | 1.42 | C |
| | 34 | 243 | 289 | 326 | <u>13</u> | 0.68 | 3.6 | 1.24 | C |
| | 35 | - | - | - | - | - | - | - | - |
| | 36 | 239 | 243 | <u>263</u> | 28 | 0.76 | 0.4 | 0.20 | A |
| | 37 | - | - | - | - | - | - | - | - |
| | 38 | 246 | 256 | <u>279</u> | 25 | 0.77 | 0.6 | 0.43 | A |
| | 39 | - | - | - | - | - | - | - | - |
| | 40 | 296 | 335 | 366 | 13 | 0.78 | 5.8 | 1.26 | C |
| | 41 | 271 | 291 | 339 | <u>11</u> | 0.64 | 1.1 | 0.42 | C |
| | 42 | 231 | 239 | <u>281</u> | 29 | 0.58 | 0.2 | 0.19 | A |
| | 43 | 233 | 234 | <u>290</u> | 31 | 0.62 | 0.4 | 0.02 | A |
| | 44 | 238 | 254 | <u>294</u> | 26 | 0.69 | 0.5 | 0.40 | A |
| Note 1: (H2 - H1) / (H3 - H2) / Underline: outside the range specified in the present invention | | | | | | | | | |

All the Cu-Ni-Al-based copper alloy plate materials of the Present Inventive Examples had high strength, and also had a Cu concentration $X_{Cu}$ in the precipitate within a range of 15 to 50 mass%, and had an excellent ability to suppress smut generation. The manufacturability index M was also low, and the manufacturability in the strengthening process combining the aging treatment, the final cold rolling, and the final heat treatment was also good.

Among the Comparative Examples, Nos. 31 to 34, 40, and 41 are examples, in which the Cu concentration $X_{Cu}$ in the precipitate was lower than the range specified in the present invention because the manufacturing conditions were outside the range specified in the present invention, and the ability to suppress smut generation could not be improved. Specifically, in Comparative Example No. 31, the cast slab heating temperature and the rolling temperature in the hot rolling final pass were low. In No. 32, the solution treatment temperature was low. In No. 33, the average cooling rate from 900°C to 700°C in the solution treatment step was slow. In No. 34, the cooling rate from 400°C to 300°C was too slow in the aging treatment step. In No. 40, the rolling temperature in the hot rolling final pass was low, and the heating holding time in the solution treatment was short. In No. 41, the average cooling rate from 400°C to 300°C in the final heat treatment step was slow.

Nos. 36, 38, and 42 to 44 are examples, in which the number density of fine precipitate particles became low because the chemical composition or the manufacturing conditions was/were outside the range specified in the present invention, and the strength level corresponding to 300 HV was not reached. Specifically, in No. 36, the Ni content was too low. In No. 38, the Al content was low and the Ni/Al ratio was high. In No. 42, the average cooling rate from 900°C to 700°C was too fast in the solution treatment step. In No. 43, the cooling rate from 400°C to 300°C was too fast in the aging treatment step. In No. 44, the cooling rate from 400°C to 300°C was too fast in the final heat treatment step.

Nos. 35, 37, and 39 are examples, in which a crack occurred in hot rolling, and therefore, manufacturing was discontinued at that point. Among these, in No. 35, the Ni content was too high. In No. 37, the Al content was too high. In No. 39, the cast slab heating temperature was too high.

(Number Density of Coarse Precipitate Particles)

In order to obtain an etched surface with few irregularities and high smoothness, it is advantageous that there are few coarse precipitates. Therefore, with respect to the plate materials (the test materials after the final heat treatment) obtained in the present invention, the number density of coarse precipitate particles was examined by the following method.

According to the above "How to Determine Number Density of Coarse Precipitate Particles", an observation plane prepared by electropolishing and ultrasonic cleaning was observed with an FE-SEM, and the number density of coarse precipitate particles having a major axis of 1.0 $\mu$m or more was obtained. The electropolishing was performed using an electropolishing device manufactured by BUEHLER GmbH (ELECTROPOLISHER POWER SUPPLUY, ELECTROPOLISHER CELL MODULE). The ultrasonic cleaning was performed for 20 minutes in ethanol using an ultrasonic cleaner "BRANSONIC M2800-J".

As a result, it was confirmed that the number density of coarse precipitates was very low in all of the Present Inventive Examples. The results are shown in Table 6.

[Table 6]

Table 6

| Category | No. | Number density of coarse precipitates ($\times 10^4$ particles/mm$^2$) |
|---|---|---|
| Present Inventive Example | 1 | 0.0 |
| | 2 | 0.6 |
| | 3 | 0.0 |
| | 4 | 0.0 |
| | 5 | 0.0 |
| | 6 | 0.1 |
| | 7 | 0.1 |
| | 8 | 0.0 |
| | 9 | 0.0 |
| | 10 | 0.0 |
| | 11 | 0.0 |
| | 12 | 0.0 |
| | 13 | 0.0 |
| | 14 | 0.0 |
| | 15 | 0.0 |
| | 16 | 0.0 |

**Claims**

1. A copper alloy plate material, having a chemical composition comprising, in mass%, Ni: 10.0 to 30.0%, Al: 1.00 to 6.50%, Ag: 0 to 0.50%, B: 0 to 0.10%, Co: 0 to 2.0%, Cr: 0 to 0.5%, Fe: 0 to 2.0%, Ga: 0 to 0.5%, Ge: 0 to 0.5%, In: 0 to 0.5%, Mg: 0 to 2.0%, Mn: 0 to 2.0%, P: 0 to 0.2%, Si: 0 to 2.0%, Sn: 0 to 2.0%, Ti: 0 to 2.0%, Zn: 0 to 2.0%, and Zr: 0 to 0.3%, with the balance of Cu and unavoidable impurities, and satisfying the following formula (1), wherein a Cu concentration $X_{Cu}$ in a precipitate determined by the following formula (2) based on an analysis of a residue electrolytically extracted in an aqueous phosphoric acid solution at a concentration of 7 mol/L is 15 to 50 mass%, and a Vickers hardness is 300 HV or more:

$$\mathrm{Ni/Al} \leq 9.0 \qquad\qquad (1)$$

wherein in the place of an element symbol in the formula (1), the value of the content of the element expressed in mass% is substituted, and

$$X_{Cu}\ (\mathrm{mass\%}) = [\mathrm{Cu} / (\mathrm{Cu} + \mathrm{Ni} + \mathrm{Al})] \times 100 \qquad (2)$$

wherein in the place of an element symbol in the formula (2), the value of the mass ratio of the element in the residue is substituted.

2. The copper alloy plate material according to claim 1, wherein a number density of fine precipitate particles having a major axis of 5 to 50 nm in an observation plane parallel to a plate surface is $1.0 \times 10^7$ particles/mm$^2$ or more.

3. The copper alloy plate material according to claim 1 or 2, wherein a full width at half maximum of an X-ray diffraction peak on a {220} crystal plane on the plate surface is 0.5° or more.

4. A method for manufacturing a copper alloy plate material, with which a plate material having a Vickers hardness of 300 HV or more is obtained by a manufacturing process comprising the following steps in the following order:

a cast slab heating step of heating a cast slab having a chemical composition comprising, in mass%, Ni: 10.0 to 30.0%, Al: 1.00 to 6.50%, Ag: 0 to 0.50%, B: 0 to 0.10%, Co: 0 to 2.0%, Cr: 0 to 0.5%, Fe: 0 to 2.0%, Ga: 0 to 0.5%, Ge: 0 to 0.5%, In: 0 to 0.5%, Mg: 0 to 2.0%, Mn: 0 to 2.0%, P: 0 to 0.2%, Si: 0 to 2.0%, Sn: 0 to 2.0%, Ti: 0 to 2.0%, Zn: 0 to 2.0%, and Zr: 0 to 0.3%, with the balance of Cu and unavoidable impurities, and satisfying the following formula (1) at 1000 to 1150°C;

a hot rolling step of performing hot rolling under the condition that a rolling temperature in a final rolling pass is 800°C or higher;

a cold rolling step of performing cold rolling at a rolling ratio of 80% or more;

a solution treatment step of holding at 950 to 1100°C for 30 to 360 seconds, and then, cooling under the condition that an average cooling rate from 900°C to 700°C is 110 to 150°C/s;

an aging treatment step of holding at 400 to 650°C for 0.5 to 75 hours, and then, cooling under the condition that an average cooling rate from 400°C to 300°C is 40 to 80°C/h;

a final cold rolling step of performing cold rolling at a rolling ratio of 300 or more; and

a final heat treatment step of holding at 400 to 700°C for 10 to 600 seconds, and then, cooling under the condition that an average cooling rate from 400°C to 300°C is 50 to 90°C/s,

$$Ni/Al \leq 9.0 \qquad (1)$$

wherein in the place of an element symbol in the formula (1), the value of the content of the element expressed in mass% is substituted.

5. The method for manufacturing a copper alloy plate material according to claim 4, with which a plate material having a Vickers hardness H3 of 300 HV or more is obtained by a manufacturing process in which a value M in the following formula (4) representing a relationship of a Vickers hardness H1 (HV) after the aging treatment step, a Vickers hardness H2 (HV) after the final cold rolling step, and a Vickers hardness H3 (HV) after the final heat treatment step is -0.2 or more and 1.2 or less:

$$M = (H2 - H1) / (H3 - H2) \qquad (4).$$

6. A method for manufacturing a copper alloy plate material, with which a plate material having a Vickers hardness H3 of 300 HV or more is obtained from a cast slab having a chemical composition comprising, in mass%, Ni: 10.0 to 30.0%, Al: 1.00 to 6.50%, Ag: 0 to 0.50%, B: 0 to 0.10%, Co: 0 to 2.0%, Cr: 0 to 0.5%, Fe: 0 to 2.0%, Ga: 0 to 0.5%, Ge: 0 to 0.5%, In: 0 to 0.5%, Mg: 0 to 2.0%, Mn: 0 to 2.0%, P: 0 to 0.2%, Si: 0 to 2.0%, Sn: 0 to 2.0%, Ti: 0 to 2.0%, Zn: 0 to 2.0%, and Zr: 0 to 0.3%, with the balance of Cu and unavoidable impurities, and satisfying the following formula (1), by a manufacturing process in which in the manufacturing of the plate material by a process including cast slab heating, hot rolling, cold rolling, solution treatment, aging treatment, final cold rolling, and final heat treatment steps in this order,

when a Vickers hardness after the aging treatment step is represented by H1 (HV), a Vickers hardness after the final cold rolling step is represented by H2 (HV), and a Vickers hardness after the final heat treatment step is represented by H3 (HV), a value M in the following formula (4) is set to -0.2 or more and 1.2 or less:

$$Ni/Al \leq 9.0 \qquad (1)$$

wherein in the place of an element symbol in the formula (1), the value of the content of the element expressed in mass% is substituted, and

$$M = (H2 - H1) / (H3 - H2) \qquad (4).$$

7. An electroconductive spring member, using the copper alloy plate material according to claim 1 as a material.

[Fig.1]

[Fig.2]

[Fig.3]

## INTERNATIONAL SEARCH REPORT

| International application No. |
| --- |
| **PCT/JP2021/027236** |

**A.    CLASSIFICATION OF SUBJECT MATTER**

*C22C 9/06*(2006.01)i; *C22F 1/00*(2006.01)n; *C22F 1/08*(2006.01)i
FI:    C22C9/06; C22F1/08 B; C22F1/08 P; C22F1/00 623; C22F1/00 622; C22F1/00 602; C22F1/00 630A; C22F1/00 630C; C22F1/00 640Z; C22F1/00 661A; C22F1/00 671; C22F1/00 681; C22F1/00 682; C22F1/00 683; C22F1/00 684B; C22F1/00 685Z; C22F1/00 686A; C22F1/00 691B; C22F1/00 691C; C22F1/00 692A; C22F1/00 694A; C22F1/00 694B; C22F1/00 630F

According to International Patent Classification (IPC) or to both national classification and IPC

**B.    FIELDS SEARCHED**

Minimum documentation searched (classification system followed by classification symbols)

C22C9/06; C22F1/00; C22F1/08

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2020-079436 A (DOWA METALTECH KABUSHIKI KAISHA) 28 May 2020 (2020-05-28) | 1-7 |
| A | WO 2020/066371 A1 (DOWA METALTECH COMPANY LIMITED) 02 April 2020 (2020-04-02) | 1-7 |
| A | JP 06-128708 A (DOWA MINING COMPANY LIMITED) 10 May 1994 (1994-05-10) | 1-7 |
| A | JP 02-149279 A (KOBE STEEL LIMITED) 07 June 1990 (1990-06-07) | 1-7 |
| A | CN 107354341 A (DALIAN UNIVERSITY OF TECHNOLOGY) 17 November 2017 (2017-11-17) | 1-7 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 October 2021** | **19 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2021/027236** |

| Patent document cited in search report | | | Publication date (day/month/year) | Patent family member(s) | Publication date (day/month/year) |
| --- | --- | --- | --- | --- | --- |
| JP | 2020-079436 | A | 28 May 2020 | (Family: none) | |
| WO | 2020/066371 | A1 | 02 April 2020 | (Family: none) | |
| JP | 06-128708 | A | 10 May 1994 | (Family: none) | |
| JP | 02-149279 | A | 07 June 1990 | (Family: none) | |
| CN | 107354341 | A | 17 November 2017 | (Family: none) | |

Form PCT/ISA/210 (patent family annex) (January 2015)

**EP 4 190 929 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012081573 A
- JP 2020050923 A
- JP 2020079436 A
- JP 2019002042 A